# EUROPEAN PATENT SPECIFICATION

(11) **EP 3 646 148 B1**
(45) Date of publication and mention of the grant of the patent: **05.03.2025**
(21) Application number: 18749879.5
(22) Date of filing: 26.06.2018
(51) Int. Cl.: G06F 3/01

(54) **HAPTIC ACTUATOR AND HAPTIC INTERFACE COMPRISING AT LEAST ONE OF SUCH ACTUATORS**
HAPTISCHES STELLGLIED UND HAPTISCHE SCHNITTSTELLE MIT MINDESTENS EINEM SOLCHEN STELLGLIED
ACTIONNEUR HAPTIQUE ET INTERFACE HAPTIQUE COMPRENANT AU MOINS UN DE CES ACTIONNEURS

(30) Priority: 28.06.2017 IT 201700072559
(43) Date of publication of application: 06.05.2020
(73) Proprietor: Trama S.r.l., 12051 Alba (CN) (IT)
(72) Inventor: CERRUTI, Flavio, 12051 Alba (CN) (IT)
(74) Representative: Garavelli, Paolo
(86) International application number: PCT/IT2018/000089
(87) International publication number: WO 2019/003254

(56) References cited:
- US-A1- 2006 290 662
- US-A1- 2010 238 132
- US-A1- 2011 141 052
- US-A1- 2016 259 411

## Description

The present invention refers to a haptic actuator and to a haptic interface comprising at least one of such actuators.

In general, the present invention refers to device for interacting with a human body.

In particular, the present invention refers to systems and processes of forced or tactile response generated by systems, such as a computer, a microcontroller, a microprocessor, an electronic control card, for the user.

In general, the prior art is represented by patent application US20140114445A1 dealing with an interface system for man-machine interaction, which comprises an array of sensors and actuators wearable or adapted to be coupled with the body of a user. A managing unit exchanges data with a control application, locally and/or remotely, to transmit data to the application, pointing out position and movements of the user in a physical environment, and to transmit feelings to the user, in at least one point of the user body important for the interaction with an operating environment. Sensors and actuators are supported by operating modules, interfacing on at least one communication channel through respective pairs of input and output communication ports. The operating modules are equipped with interconnection devices in order to be assembled one onto the other in a planar arrangement and/or in a stacked arrangement.

Moreover, the prior art is given by patent application WO2001008132A1 dealing with an input/output device comprising a plurality of haptic elements, wherein each haptic element comprises a contact surface and is configured for producing an haptic effect in response to the touched contact surface.

In particular, the prior art is represented by patent application EP3040844A1 dealing with a system for modifying an elastic stiffness of at least one portion of a component of a vehicle comprising one or more devices coupled with the vehicle component and with a processor. The processor is configured to be able to pass from a first to a second mode through a software application, modifying the stiffness value of at least one portion of the vehicle component.

Patent application EP3040844A1 provides a solution to the problem of setting the stiffness value of a surface of haptic interface to allow an efficient response to the user through an adequate space vibration of the surface and at the same time to allow suitably dimensioning an actuator safeguarding sizes and masses of a vibrating system.

Patent application US 2016/259411A1 discloses a portable electronic device comprising a housing, a touch assembly, associated with the housing, an actuator plate assembly associated with the touch assembly, an actuator separated from the actuator plate assembly by a gap, a sensor associated with the actuator plate to measure the gap, and whereby an electromagnetic input supplied to the actuator plate by the actuator may be varied as a function of the gap measurement.

In spite of these efforts, there remain the need of improving the architecture of a haptic interface by solving the problem of the dynamic behavior affected by the masses in operation under elastic suspension and of the energetic consumption of the electromagnetic actuations.

Object of the present invention is providing a haptic interface capable of increasing the sensitivity to perceive the movements of the user body and transmit to the user the feelings in an univocal and powerful way.

The above and other objects and advantages of the invention, as will result from the following description, are obtained with a haptic actuator as claimed in claim 1.

Preferred embodiments of the present invention are the subject matter of the dependent claims.

It is intended that all enclosed claims are an integral part of the present description.

The present invention will be better described by some examples thereof, provided as non-limiting examples with reference to the enclosed drawings, in which:
- Figure 1 shows a schematic view of an example of a haptic interface;
- Figure 2 shows a schematic view of an example of a haptic actuator;
- Figure 3 shows a schematic sectional view of the haptic actuator of Figure 2;
- Figure 4 shows a further example of the haptic interface;
- Figure 5 shows a schematic sectional view of the haptic actuator according to the present invention; and
- Figure 6 shows a schematic sectional view of another preferred embodiment of a haptic actuator according to the present invention.

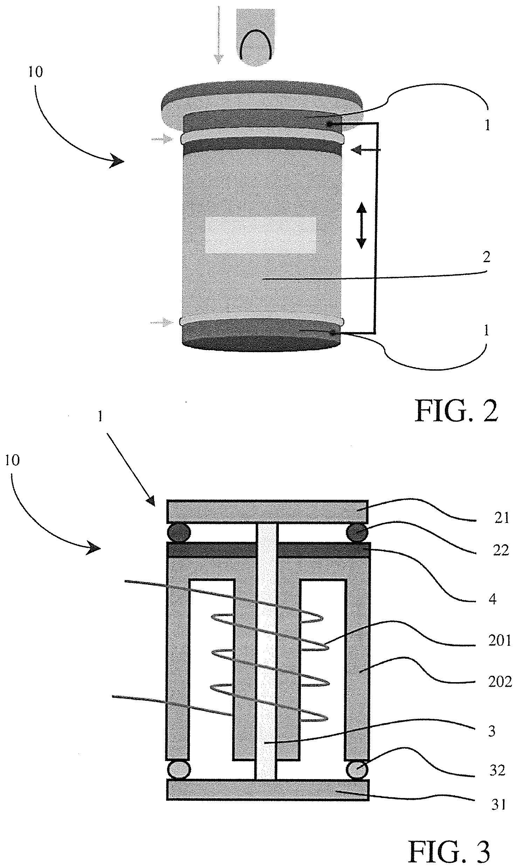

With reference then to Figures 2, 3 and 5, 6, it is possible to note that, in general, the haptic actuator 10 according to the present invention comprises at least one sensor 1 and at least one actuation 2 with magnetic operation, such sensor 1 comprising at least one support 11; 21; 31, preferably adapted to be placed integral to at least one surface of a body M (so-called haptic surface), as will be described below in more detail, supported by at least one elastic element 12; 22; 32, such sensor 1 being designed for detecting the force applied on at least one of such supports 11; 21; 31 representing, for example, the touch movements performed by a user on one of such surfaces of a body M.

Obviously, the magnetic operation of the actuation 2 can depend on a magnetic flux generated in various ways, such as, for example, through permanent magnets or electromagnets and different architectures in which they can be organized, without therefore departing from the scope of the present invention.

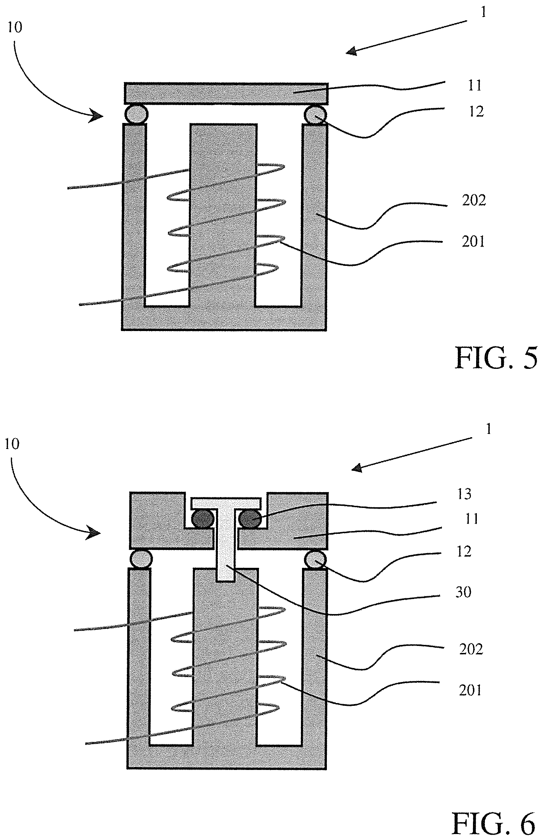

According to the present invention, as shown in Figure 5, the support 11; 21; 31 is made of ferromagnetic material and such actuation 2 comprises at least one electric winding 201 to allow magnetizing a stator body 202 generating a magnetic flux when current is flown in the electric winding 201 itself, such applied force being detected by the sensor 1 depending on a distance between the support 11; 21; 31 and the stator body 202.

Preferably, the stator body 202 is made of soft material with low hysteresis, to ensure canceling the magnetic flux when current is stopped in the electric winding 201.

With particular reference to Figure 5, it is possible to note that the sensor 1 can comprise a single support 11, for example being adapted to be placed integral to the surface of a body M (not shown), and a single elastic element 12 interposed between such support 11 and the stator body 202: the embodiment of the haptic actuator 10 of Figure 5 can be used, for example, to drive haptic surfaces which are constrained to the container which contains them with external fasteners (typically elastic rubber supports): in this case, these external constraints are those which keep the support 11 in its correct position, namely coaxial with the electromagnet composed of the electric winding 201 and the stator body 202, to be attracted by the magnetic force.

In another possible embodiment of the haptic actuator 10 as shown in particular in Figure 6, the haptic actuator 10 according to the present invention further comprises at least one connecting element 30 adapted to keep the support 11 sliding onto the stator body 202, for example by interposing at least one elastic element 13.

In particular, purpose of the connecting element 30 is keeping together the support 11 and the stator body 202, because this specific embodiment would be aimed to be used when the actuator is, under all effects, used as system to keep the haptic surface joined to the external support (for example a display, to keep the front surface of the screen joined to the rear shell of the screen itself). The presence of the connecting element 30 thereby allows the support 11 to slide towards the stator body 202, but not to move away too much, thereby preventing the haptic surface from detaching.

In the embodiments of Figures 5 and 6, which allow advantageously making a haptic actuator 10 having extremely small sizes, because the movement of the surface of a body M occurs when the electromagnet composed of the electric winding 201 and the stator body 202 is supplied, attracting the support 11 and compressing the elastic element 12, the measure of the force applied on such support 11, for example exerted by the user on the surface of a body M, can be performed through the sensor 1, for example, in at least three different ways:
1) measuring the capacity between support 11 and stator body 202;
2) measuring the reluctance (or inductance) of the magnet;
3) measuring the current transient both when supplying and when turning the magnet off.

All the above physical values, in fact, depend on the distance between the upper support and the stator body 202 of the magnet itself.

Obviously, it could be possible to measure such distance also with optic or laser or ultrasound acoustic sensors, or with any other position sensor capable of measuring the distance between support 11 and stator body 202, without therefore departing from the scope of the present invention.

As shown in particular in Figures 2 and 3, the sensor 1 comprises a first support 21 made of ferromagnetic material, for example adapted to be placed integral to a surface of a body M, and supported by a first elastic element 22 with high stiffness, for example to be able to calibrate the movement of the surface of a body M in the instant in which the user imposes the movements, such sensor 1 further comprising at least one sensitive element 4 on at least one printed circuit, which will be described below in more detail.

Also in this case, the actuation 2 comprises at least one electric winding 201 to allow magnetizing the stator body 202 generating a magnetic flux when current is flown in the electric winding 201 to be able to control the movement of a second support 31 made of ferromagnetic material. The second support is supported by a second elastic element 32 with low stiffness to be able to transmit to the surface of a body M response movements as feelings to the user.

The first support 21 and the second support 31 are connected through at least one a-magnetic, substantially rigid connecting element 3, to be able to act synchronously with respect to the sensitive element 4 on the printed circuit. The second support 31 is therefore preferably also integral to the surface of a body M through the connecting element and the first support and supported by a second elastic element 32 with low stiffness to be able to transmit to the surface of a body M, through such connecting element, response movements as feelings to the user.

The printed circuit of the sensitive element 4 comprises at least one pair of conductive areas facing at least one of the first 21 and second 31 supports, each conductive area composing a first side of a capacitor whose capacity is determined by the size of the conductive area and by the thickness of a dielectric, at least one of the first 21 and second 31 supports composing a second side of both capacitors, the equivalent circuit being equal to two capacitors in series delimited by each conductive area of the sensitive element 4. The measure of the global capacity of the equivalent circuit allows measuring the distance between the sensitive element 4 and the surface of a body M.

The first support 21 and the second support 31 coaxially move to be able to act with respect to a same point of the surface of a body M.

The elastic element 12, 22, 32 can be made of any elastic material, and in the particular case of the elastic elements 12, 22 made of an a-magnetic material, since they are crossed by a magnetic flux, and of any shape suitable for the purpose: for example, the elastic element 12, 22, 32 could be made of natural or synthetic rubber. The elastic element 12, 22 could also be made as an a-magnetic spring made of metal, for example steel.

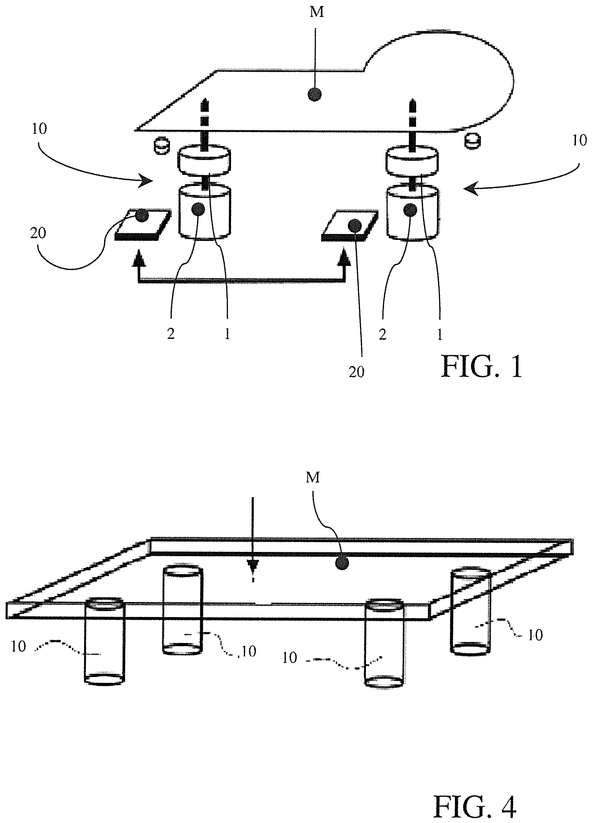

With reference instead to Figure 1, it is possible to note that a haptic interface according to the present invention comprises a surface of a body M supported by at least one haptic actuator 10 as previously described and a managing unit 20 of the haptic actuator 10 for exchanging data with a control application, locally and/or remotely, in order to transmit data pointing out of movements of a user and in order to transmit feelings to the user located in at least one point of the user body. The haptic actuator 10 comprises at least one sensor 1 adapted to collect measuring data pointing out movements of the surface of a body M and to supply the collected measuring data to the control application through the managing unit 20 and at least one actuation 2 adapted to move the surface of a body M, depending on instruction data from the control application received by the sensor 1 through the managing unit 20.

Advantageously, the haptic actuator 10 perceives touch movements of the surface of a body M in the instant in which the user imposes the movements and transmits to the surface of a body M response movements as feelings to the user. In particular, the touch movements are small, the response movements are big. In fact, the response movements as feelings to the user are an amplification in magnitude of the touch movements. Alternatively, the response movements as feelings to the user are predefined.

With reference to Figure 4, it is possible to note that the surface of a body M is constrained by a plurality of haptic actuators 10 according to the present invention, capable of dividing the forces in a suitable and synchronized way by coordinating the managing unit 20.

According to a preferred method, the coordination of the managing unit 20 occurs through an interpolation with closed loop to generate a motion trajectory of the surface of a body M according to a reverse kinematic algorithm, to be able to obtain a sequence of positions which every haptic actuator 10 must assume in time: through the sensor 1 the radiated position is measured, providing the position data to an interpolator; in closed loop a sequence of points compensated with the measured error is supplied to the reverse kinematic algorithm, to allow the actuation 2 to keep a real trajectory very near to the generated one.

According to a possible simpler alternative, the coordination of the managing unit 20 could also work only with a generation of pulses given by specific current profiles (without therefore coordination and feedback measure). The most typical method of coordination of the managing unit 20 in fact result in using the sensor 1 of the actuator 10 according to the present invention to evaluate the compression force of the elastic element. When a certain force threshold is exceeded, an haptic pulse is generated, providing a predefined current profile to the magnet. This mode actually emulates a mechanical push-button, because, when it is pressed, up to a certain force nothing happens, and after that the push-button collapses and at the end of the collapse the electric switch closes: at the same instant, the user perceives with his own finger the click which derives from the simple fact that, after the collapse, the push-button bumps onto the contact, causing an impact which the finger perceives as tactile feeling.

The almost rigid surface of a body M is constrained with respect to at least three, not aligned points to be able to assume one of the following configurations: one of the three points connected to the haptic actuator 10; two of the three points connected to a respective haptic actuator 10; each point connected to a respective haptic actuator 10.

The haptic interface can further comprise a software library to allow choosing specific pulses and creating pulses customized by a user.

The haptic actuator and the haptic interface of the present invention therefore allow reaching the pre-fixed objects.

By imposing a specific trend of the compression of the soft part of a finger, a predefined haptic feeling is generated.

Using a surface of a body mobile to obtain this object means being able to generate a specific trajectory of the surface of a body in space.

The main difficulty for reaching this objective is the behavior of a user, who moves his finger in a rather unforeseeable way.

The result is imposing a predefined haptic response to the user to be able to generate a specific trajectory of the surface of a body, wherein the reference position is the position of the user's finger.

It is possible to simultaneously use a plurality of haptic actuators when it is necessary to haptically move a heavy and complex body surface.

Since the position of a body surface not deformable in space is univocally located if three different points of the surface itself are known, it follows that it is possible to use the surface of a body in three basic configurations to generate the desired haptic effect depending on the geometry of the body surface: a) fastening two points of the surface and using a single haptic actuator; b) fastening a point of the surface and using two haptic actuators only; c) using three haptic actuators.

Moreover, it is further possible to move the surface of a body with more than three haptic actuators, theoretically from four to n, by accurately coordinating such actuators. The reasons why this possibility is provided is because the real surfaces can be too heavy if compared to the actuation capabilities of the haptic actuator, or can be complex in shape and therefore have the need of introducing haptic actuators in particular positions.

When more that one actuator is used to move the same surface, a problem occurs with the geometric coordination between the various actuators. For example, in a haptic interface formed of four haptic actuators according to the present invention, when a user imposes a force F in point P, the single haptic actuators would measure through their own position/force sensor only a component of such force. Though the force measured by each sensor results depending on the position of point P on the surface, anyway the sum of the four measured forces will be equal to the force F. When the global force exceed the force value set as threshold for actuating the haptic pulse, the actuators activates their own magnets in order to generate the controlled movement of the surface. The forces actuated by the actuators would have to take into account the system geometry and therefore would have to be coordinated. Since the purpose is generating a predefined trajectory exactly in the point in cui the user has exceeded the stress, the haptic actuators will have to be capable of dividing the forces in a suitable and synchronized way.

When the finger acts on the surface, the calibrated elastic element will be compressed. The proximity sensor detects the action and sends these information to the microcontroller. The user action will be monitored till the user force above the surface exceeds the preset threshold. Immediately, the electromagnetic motor of the actuation will be activated and, using the proximity sensor as feedback element, a controlled trajectory of the surface will be generated.

If more than one microcontroller is used in a system, information about the proximity sensor are shared among the various devices together with other status information. This allows the electromagnetic motors to move synchronously to produce a very accurate trajectory of the complete surface element.

Since the microcontroller is a servo-actuator, any possible trajectory could be programmed to be activated during the haptic feedback phase.

The control system of the microcontroller is equipped with a software library of pulses which the user can easily choose. if specific pulses are required, a software tool is available for creating user-defined pulses.

For generating the haptic feedback pulse, it is possible to define two force thresholds: the thrust threshold, the release threshold. In this way, a first haptic pulse can be generated when a user exceeds the thrust threshold, a second haptic pulse can be generated when the user drops below the release threshold.

The haptic actuators according to the present invention can be organized in a family of devices which have the same function and control strategy, but are different only for the maximum force which they manage to actuate on the mobile surface.

In order to choose the correct device, it is important to know the weight of the surface to be moved and the maximum acceleration necessary for the desired pulse shape.

Motor vehicle HMI devices such as touch panel, touch pad and tactical are covered by a simple surface, for example circular, rectangular, or complex, stylistically or aesthetically defined. To obtain a predefined haptic response to a user, for example, to a user's finger, in any point of the surface, one or more haptic actuators and sensors are used in a coordinated way. To be able to give the haptic actuators the capability of measuring local physical parameters and to be able to share these information in real time with other actuators, it is necessary that the actuators operate in a coordinated way. It is possible to program any movement algorithm, in a simplified way or through a high-level interpolation to compensate for the errors. Any communication technology for sharing information in real time could be used.

The geometric coordination of the haptic actuators can be performed through a strategy similar to the one used in industrial automations for controlling a robot, generally designated with the name of axes interpolation algorithm with closed loop. Such algorithm provides that there is a software block called trajectory generator which mathematically defines the sequence of points which the tool managed by the robot must run in air (in case of a haptic actuator of a haptic interface, the point corresponds to the one where the user has imposed his force). The block of generating the trajectory supplies the computer points to a software block called reverse kinematic algorithm which allows obtaining, starting from the desired sequence of points, the sequence of positions which every axis must assume in time (in case of a robot, an axis corresponds to a motor; in case of an haptic actuator of a haptic interface, an axis corresponds to an actuator. At that time, every axis is moved with a positioning algorithm, which directly drives the necessary force. Since the actuation, due to external disturbances, could be not perfect, the radiated position is measured with a sensor for every axis, and such data are supplied to a software block called interpolator, whose purpose is understanding if the real movement corresponds to the desired movement or not. If there are errors, the loop is closed, supplying the reverse kinematic algorithm with a sequence of points compensated with the measured error, allowing the robot to keep a real trajectory very near to the generated trajectory.

There are two methods for implementing the above described strategy in a real system: i) a single microcontroller performs the sensor measures for all haptic actuators and the interpolation algorithm drives all actuators; ii) a microcontroller for every actuator performs the interpolation algorithm locally, obtaining necessary information related to the other actuators through a Real Time communication network.

Notwithstanding that it is provided to use both methods, the first method has the defect that a high number of signals must be connected to the microprocessor, while the second method provides that every microprocessor measures and drives only one haptic actuator, thereby being much simpler both from the hardware point of view and from the software point of view. With this second method, it is possible to deem the haptic actuator of a haptic interface as an autonomous functional block, composed of the mechanical part plus the electronic part based on a local microcontroller. As soon as it is necessary to mutually connect many haptic actuators for the coordination of the same surface, it will be enough to connect the Real Time network to all actuators being present and configure the system so that these latter ones can operate in a coordinated way.

In a preferred embodiment thereof, a haptic actuator according to the present invention is composed, for example, of:
- a single support integral to a surface of a body to allow measuring the position of the body surface by being subjected to the action of an elastic return force given by the compression of a single elastic element which supports the support and therefore the surface to be moved, by opposing an elastic force to the pressure action of the user;
- an electric winding adapted to allow magnetizing a stator body to allow generating a high magnetic flux when current is flown in the electric winding, the stator body being made of soft material, with low hysteresis, to ensure canceling the magnetic flux when the current in the electric winding becomes null, the position of the stator body being constrained to a fixed element as position reference for all measures and actuations performed by the suspension.

According to another preferred embodiment, a haptic actuator is composed, for example, of:
- a first support made of ferromagnetic material, integral to a surface of a body mobile with respect to a sensitive element, to allow measuring the position of the body surface by being subjected to the action of an elastic return force given by the compression of a first elastic element which supports the first support, and therefore the surface to be moved, by opposing an elastic force to the pressure action of a user, the stiffness of the first elastic element allowing to calibrate the desired movement of the surface to be moved and to compute the force with cui the surface has been stressed;
- a sensitive element on a printed circuit which allows measuring the distance from the first support, on the printed circuit two conductive areas being designed facing the first support, each conductive area composing the side of a capacitor whose capacity is determined by the size of the area itself and by the thickness of the dielectric, the first support composing a side of both capacitors, the equivalent circuit being a series of two capacitors whose side present on the printed circuit compose the ends of the series. Since the global capacity depends on the thickness of the dielectric, a simple capacity measure allows measuring the distance between the printed circuit and the first support;

- an electric winding adapted to allow magnetizing a stator body to allow generating a high magnetic flux when current is flown in the electric winding, the stator body being made of soft material, with low hysteresis, to ensure canceling the magnetic flux when the current in the electric winding becomes null, the position of the stator body being constrained to a fixed element as position reference for all measures and actuations performed by the actuator;
- a second support made of magnetic material, which operates as attracting element for the magnetic force exerted by the actuation composed of the stator body - electric winding assembly;
- a connecting a-magnetic element necessary to guarantee a constant distance between the first support and a second support and to transfer the forces between the due supports;
- a second elastic element adapted to support the second support, extending when the first support, connecting element, second support assembly is moved downwards, and being compressed when such assembly is moved upwards.

In this embodiment, when the magnetic force acts on the second support, the second support expresses an upwards force which, through the connecting element and the first support, can be transferred to the surface of a body to be moved. When the user acts on the surface of a body of the haptic interface, he imposes a downward force onto the first support, making the first elastic element and the circuit electronics compressed, and, due to the capacity measure on the sensitive element, can accurately measure the user action. The electronics, depending on the user action, can decide at a certain instant to impose a magnetic force onto the second support of the system by injecting a suitable current into the electric winding. The magnetic force imposed onto the second support is directed upwards and therefore opposite to the force direction imposed by the user. Since the electronics can measure in every instant the position of the two supports, the position can be controlled in time and in space according to a desired trajectory. The magnetic force therefore, especially if managed with a servo-control algorithm, allows moving the surface of a body according to a predefined strategy. In particular, if the servo-control algorithm is evolved enough, possible errors introduced in the system, such as, for example, a weight resting onto the surface of a body, can be compensated.

A haptic actuator of a haptic interface can be asymmetrical with respect to the imposed forces. A high quality of the haptic interface in the action of detecting the user action implies, in physical terms, a very small movement of the surface of a body in the instant in which the user imposes his own force with his own finger. This request implies that the surface of a body must be constrained to the fixed part of the haptic interface with a very high stiffness.

Instead, making an haptic interface capable of performing wide, accurate, quick and well controlled movements, with a low encumbrance of the actuation system, implies that the surface of a body is constrained to the fixed part with a very low stiffness, so that, when the electromagnetic actuator generates its own force, this latter one must compensate for the inertial force of the system, the force imposed by the user and the force given by the stiffness with which the surface has been constrained to the fixed part of the system. Since the sizes of the stator body are proportional to the exerted force, and since the inertial force and the force imposed by the user cannot be modified, it results that the sizes of the stator body are determined by the stiffness with which the surface of a body is constrained.

The haptic interface of the present invention has a stiffness of the haptic actuator opposite to the user action given by the first elastic element. Vice versa, the stiffness of the haptic actuator when it is moved upwards by the electromagnetic actuator is given by the second elastic element.

It follows that, by selecting a very stiff first elastic element, a high quality of the haptic interface is obtained as regards a user, by selecting a very loose second elastic element a low elastic force is obtained, which opposes the actuator allowing to have reduced sizes for this latter one.

Summarizing, the asymmetrical haptic actuator of the invention allows removing a major problem, which occurred during all experiments performed with all other types of actuators: it is not necessary any more to compromise between the quality perceived by a user and the maximum size provided for the actuators.

The actuation can be very accurate and compensate for errors due to external disturbances. The haptic vibration systems can use vibration systems, both small motors with ERM eccentric, and linear electromagnetic resonators LRA, and actuating systems such as piezoelectric and electrostatic systems.

The haptic interface of the invention allows performing the positioning of a body surface in a controlled mode with closed loop, exactly as occurs in industrial positioning systems and numeric controls. This feature becomes important in the automotive sector. For example, a series of haptic keys on a surface present in the central tunnel of a car, typically near the gearbox area, can be used by a user for resting objects, such as a telephone, house keys, a bottle or a glass. The proposed solution, due to the mechanism with closed loop, will always be able to impose the same haptic feedback also when there are these objects, which, due to their mass, change the mechanical characteristics of the system.

The invention allows using haptic actuators in a coordinated positioning network. If, to create a haptic vibration, the available actuator is not enough regarding intensity, it is possible to use more than one actuator simultaneously. The need of using many actuators simultaneously can depend on the shape of the surface of the membrane or on the constraint points.

The haptic interface of the invention can be used with the same interpolated servo-control modes used, for example, in industrial robots, allowing to generate the desired vibration in any point of the surface, also when there are many actuators. This feature, by the way, is also the reason why the haptic actuator has been equipped with real-time communication capabilities, since only in this way it is possible to share necessary information for the interpolated motion.

The concentricity of the sensor with the actuation guarantees a certain actuation accuracy. In fact, the haptic actuator allows measuring the position of a point of the surface of a body in the same point in cui the actuation of the magnetic force occurs. This concentricity allows having very accurate information both about the effects caused by the outside onto the surface, and about the generation of movements. The lack of concentricity between actuation and measure can in fact cause errors which the system could not be able to detect and therefore compensate, for example, in the distortions.

The elastic elements are preferably elements made of materials adapted to avoid a short circuit of the magnetic flux.

Finally, the haptic actuator and the haptic interface according to the present invention as previously described allow making a high quality haptic surface, because they do not make the movement of the surface visually perceivable by a user, and manage to create, in the user's fingers, optimum tactile feelings. In fact, the haptic actuator according to the present invention allows generating accelerations up to values on the order of 10g of surfaces weighing a few hundreds of grams, making them move in amplitudes on the order of 50/100 microns, thereby obtaining great accelerations with very small movements in space, concentrating in a very small volume all energies which are exploited for moving the haptic surface, namely the magnetic force which derives from the magnetic flux generated by the actuation with magnetic operation and the elastic force given by the elastic elements which are compressed, for example when the magnet or electromagnet attracts the surface towards itself: everything with a haptic actuator according to the present invention having a volume not much greater than 1 cm³.

## Claims

1. Haptic actuator (10) comprising at least one sensor (1) and at least one actuation (2) with magnetic operation comprising at least one stator body (202), said sensor (1) comprising at least one support (11; 21; 31) supported by at least one elastic element (12; 22; 32), said sensor (1) being designed for detecting a force applied onto at least one of said supports (11; 21; 31) depending on a distance between at least one of said supports (11; 21; 31) and one of said stator bodies (202), **characterized in that** said at least one sensor (1) comprises a first support (21) made of ferromagnetic material and supported by a first elastic element (22), said first elastic element (22) having a high stiffness, said sensor (1) further comprising at least one sensitive element (4) on at least one printed circuit, said actuation (2) comprising at least one of said electric windings (201) to allow magnetizing one of said stator bodies (202) generating a magnetic flux when current is flown in the electric winding (201) to be able to control the movement of a second support (31) made of ferromagnetic material integral with the surface of a body (M) and supported by a second elastic element (32), said second elastic element (32) having a low stiffness to be able to transmit to the surface of a body (M) response movements as haptic feedback to a user, said first support (21) and said second support (31) being connected through an a-magnetic connecting element (3) to be able to act synchronously with respect to a sensitive element (4), said sensitive element (4) on a printed circuit comprising at least one pair of conductive areas facing at least one of said first (21) and second (31) supports, each conductive area composing a first side of a capacitor whose capacity is determined by the size of the conductive area and by the thickness of a dielectric, at least one of said first (21) and second (31) supports composing a second side of both capacitors, the equivalent circuit being equal to two capacitors in series delimited by each conductive area of said sensitive element (4), the measure of the global capacity of the equivalent circuit allowing to measure the distance between said sensitive element (4) and said surface of a body (M).

2. Haptic actuator (10) according to claim 1, **characterized in that** said support (11; 21; 31) is made of ferromagnetic material and said actuation (2) comprises at least one electric winding (201) to allow magnetizing said stator body (202) generating a magnetic flux when current is flown in said electric winding (201).

3. Haptic actuator (10) according to the previous claim, **characterized in that** said stator body (202) is made of soft material with low hysteresis, to ensure canceling the magnetic flux when current is stopped in said electric winding (201).

4. Haptic actuator (10) according to any one of the previous claims, **characterized in that** said at least one sensor (1) comprises a single support (11) and a single elastic element (12) interposed between said support (11) and said stator body (202).

5. Haptic actuator (10) according to the previous claim, **characterized in that** it comprises at least one connecting element (30) adapted to keep said support (11) sliding on one of said stator bodies (202) by interposing at least one elastic element (13).

6. Haptic actuator (10) according to claim 1, **characterized in that** said first support (21) and said second support (31) coaxially move to be able to act with respect to a same point of said surface of a body (M).

7. Haptic actuator (10) according to any one of the previous claims, **characterized in that** said elastic element (12; 22; 32) is made of an a-magnetic material.

8. Haptic interface, comprising a surface of a body (M) supported by at least one haptic actuator (10) according to claim 1 and a managing unit (20) of the haptic actuator (10) for exchanging data, locally and/or remotely, in order to transmit data pointing out movements of a user and in order to transmit haptic feedback to the user located in at least one point of the user body, wherein said at least one haptic actuator (10) comprises at least one sensor (1) adapted to collect measuring data pointing out movements of the surface of a body (M) and to supply the collected measuring data to a control application through the managing unit (20) and at least one actuation (2) adapted to move the surface of a body (M), depending on instruction data from the control application received by the sensor (1) through the managing unit (20), **characterized in that** said at least one haptic actuator (10) perceives touch movements of the surface of a body (M) in the instant in which the user imposes the movements and transmits to the surface of a body (M) response movements as haptic feedback to the user, said sensor (1) comprising at least one support (11; 21; 31) made of ferromagnetic material integral to the surface of a body (M) and supported by at least one elastic element (12; 22; 32), and said actuation (2) comprising at least one electric winding (201) to allow magnetizing a stator body (202) generating a magnetic flux when current is flown in the electric winding (201), said sensor (1) being designed for detecting a force applied on at least one of said supports (11; 21; 31) depending on a distance between at least one of said supports (11; 21; 31) and one of said stator bodies (202).

9. Haptic interface according to the previous claim, **characterized in that** the response movements as haptic feedback to the user are an amplification in magnitude of the touch movements.

10. Haptic interface according to any one of claims 8 or 9, **characterized in that** the response movements as haptic feedback to the user are predefined.

11. Haptic interface according to any one of claims 8 to 10, **characterized in that** said surface of a body (M) is constrained by a plurality of said haptic actuators (10) capable of dividing the forces in a suitable and synchronized way by coordinating the managing unit (20).

12. Haptic interface according to any one of claims 8 to 11, **characterized in that** said almost stiff surface of a body (M) is constrained with respect to at least three non-aligned points to be able to assume one of the following configurations: one of the three points connected to said haptic actuator (10); two of the three points connected to a respective haptic actuator (10); each point connected to a respective haptic actuator (10).

13. Haptic interface according to any one of claims 8 to 12, **characterized in that** it comprises a software library to allow choosing specific pulses and creating pulses customized by a user.

## Patentansprüche

1. Haptischer Aktuator (10) umfassend mindestens einen Sensor (1) und mindestens eine Betätigung (2) mit Magnetbetätigung umfassend mindestens einen Statorkörper (202), wobei der Sensor (1) mindestens einen Träger (11; 21) umfasst 31), der von mindestens einem elastischen Element (12; 22; 32) getragen wird, wobei der Sensor (1) in der Lage ist, eine auf mindestens einen der Träger (11; 21; 31) abhängig von einem Abstand zwischen mindestens einem der Träger (11; 21; 31) und einem der Statorkörper (202), **dadurch gekennzeichnet, dass** der mindestens eine Sensor (1) einen ersten Träger (21) umfasst. aus ferromagnetischem Material hergestellt und von einem ersten elastischen Element (22) getragen, wobei das erste elastische Element (22) eine hohe Steifigkeit aufweist, wobei der Sensor (1) außerdem mindestens ein empfindliches Element (4) auf mindestens einer gedruckten Schaltung umfasst, die Betätigung (2) Einschließen mindestens einer der elektrischen Wicklungen (201), um die Magnetisierung eines der Statorkörper (202) zu ermöglichen und einen magnetischen Fluss zu erzeugen, wenn Strom in der elektrischen Wicklung (201) fließt, um die Bewegung steuern zu können eine zweite Stütze (31) aus ferromagnetischem Material, die fest mit der Oberfläche eines Körpers (M) verbunden ist und von einem zweiten elastischen Element (32) getragen wird, wobei das zweite elastische Element (32) eine geringe Steifigkeit aufweist, um es auf die Oberfläche übertragen zu können von einem Reaktionsbewegungen des Körpers (M) als haptische Rückmeldung an einen Benutzer, wobei der erste Träger (21) und der zweite Träger (31) über ein nichtmagnetisches Verbindungselement (3) verbunden sind, um synchron in Bezug auf ein empfindliches Element wirken zu können (4), wobei das empfindliche Element (4) auf einer gedruckten Schaltung mindestens ein Paar leitender Bereiche aufweist, die mindestens einem der ersten (21) und zweiten (31) Träger zugewandt sind, wobei jeder leitende Bereich eine erste Seite eines Kondensators bildet, dessen Kapazität durch bestimmt wird Größe des leitenden Bereichs und die Dicke eines Dielektrikums, wobei mindestens einer der ersten (21) und zweiten (31) Träger eine zweite Seite beider Kondensatoren bildet, wobei die Ersatzschaltung gleich zwei ist Kondensatoren in Reihe, die durch jede leitende Zone des empfindlichen Elements (4) begrenzt werden, wobei die Messung der Gesamtkapazität des Ersatzschaltkreises die Messung des Abstands zwischen dem empfindlichen Element (4) und der Oberfläche eines Körpers (M) ermöglicht.

2. Haptischer Aktuator (10) nach Anspruch 1, **dadurch gekennzeichnet, dass** der Träger (11; 21; 31) aus ferromagnetischem Material besteht und der Aktuator (2) mindestens eine elektrische Wicklung (201) umfasst, um die Magnetisierung desselben zu ermöglichen Statorkörper. (202) Erzeugen eines magnetischen Flusses, wenn Strom in der elektrischen Wicklung (201) fließt.

3. Haptischer Aktuator (10) nach dem vorherigen Anspruch, **dadurch gekennzeichnet, dass** der Statorkörper (202) aus weichem Material mit geringer Hysterese besteht, um die Aufhebung des magnetischen Flusses zu gewährleisten, wenn der Strom in der elektrischen Wicklung (201) abnimmt unterbrochen.

4. Haptischer Aktuator (10) nach einem der vorhergehenden Ansprüche, **dadurch gekennzeichnet, dass** der mindestens eine Sensor (1) einen einzelnen Träger (11) und ein einzelnes elastisches Element (12) umfasst, das zwischen dem Träger (11) und dem Träger (11) angeordnet ist Körperstator (202).

5. Haptischer Aktuator (10) nach dem vorherigen Anspruch, **dadurch gekennzeichnet, dass** er mindestens ein Verbindungselement (30) umfasst, das in der Lage ist, den Träger (11) durch Zwischenschaltung mindestens eines elastischen Elements auf einem der Statorkörper (202) gleitend zu halten Element (13).

6. Haptischer Aktuator (10) nach Anspruch 1, **dadurch gekennzeichnet, dass** sich der erste Träger (21) und der zweite Träger (31) koaxial bewegen, um in Bezug auf denselben Punkt der Oberfläche eines Körpers (M) wirken zu können.

7. Haptischer Aktuator (10) nach einem der vorhergehenden Ansprüche, **dadurch gekennzeichnet, dass** das elastische Element (12; 22; 32) aus nichtmagnetischem Material besteht.

8. Haptische Schnittstelle, umfassend eine von mindestens einem haptischen Aktuator (10) nach Anspruch 1 getragene Oberfläche eines Körpers (M) und eine Verwaltungseinheit (20) des haptischen Aktuators (10) zum Austausch von Daten, lokal und/oder aus der Ferne, um Daten zu übertragen, die die Bewegungen eines Benutzers erfassen, und um haptisches Feedback an den Benutzer zu übertragen, der sich an mindestens einem Punkt des Körpers des Benutzers befindet, wo sich der mindestens eine haptische Aktuator befindet (10) umfasst mindestens einen Sensor (1), der geeignet ist, Messdaten zu sammeln, die Bewegungen der Oberfläche eines Körpers (M) erfassen, und die gesammelten Messdaten über die Verwaltungseinheit (20) und mindestens einen an eine Steueranwendung bereitzustellen Implementierung (2), die in der Lage ist, die Oberfläche eines Körpers (M) auf der Grundlage der vom Sensor (1) über die Verwaltungseinheit (20) empfangenen Befehlsdaten der Steueranwendung zu bewegen, **dadurch gekennzeichnet, dass** der mindestens eine haptische Aktuator (10) nimmt i wahr taktile Bewegungen der Oberfläche eines Körpers (M) in dem Moment, in dem der Benutzer die Bewegungen auferlegt und Reaktionsbewegungen an die Oberfläche eines Körpers (M) als haptische Rückmeldung an den Benutzer übermittelt, genannt Sensor (1), einschließlich mindestens eines Unterstützung (11; 21; 31) aus ferromagnetischem Material, das fest mit der Oberfläche eines Körpers (M) verbunden ist und von mindestens einem elastischen Element (12; 22; 32) getragen wird, und wobei der Antrieb (2) mindestens eine elektrische Wicklung (201) umfasst, um die Magnetisierung eines Statorkörpers (202) zu ermöglichen, der einen magnetischen Fluss erzeugt, wenn Strom in der elektrischen Wicklung (201) fließt, wobei der Sensor (1) zur Erkennung geeignet ist eine Kraft, die auf mindestens einen der Träger (11; 21; 31) ausgeübt wird, als Funktion eines Abstands zwischen mindestens einem der Träger (11; 21; 31) und einem der Statorkörper (202).

9. Haptische Schnittstelle nach dem vorherigen Anspruch, **dadurch gekennzeichnet, dass** die Reaktionsbewegungen als haptische Rückmeldung an den Benutzer eine betragsmäßige Verstärkung der taktilen Bewegungen darstellen.

10. Haptische Schnittstelle nach einem der Ansprüche 8 oder 9, **dadurch gekennzeichnet, dass** die Reaktionsbewegungen als haptische Rückmeldung an den Benutzer vordefiniert sind.

11. Haptische Schnittstelle nach einem der Ansprüche 8 bis 10, **dadurch gekennzeichnet, dass** die Oberfläche eines Körpers (M) durch mehrere haptische Aktuatoren (10) eingeschränkt wird, die geeignet sind, die Kräfte auf geeignete und synchronisierte Weise zu verteilen durch Koordinierung der Verwaltungseinheit (20).

12. Haptische Schnittstelle nach einem der Ansprüche 8 bis 11, **dadurch gekennzeichnet, dass** die nahezu starre Oberfläche eines Körpers (M) in Bezug auf mindestens drei nicht ausgerichtete Punkte eingeschränkt ist, um einen von ihnen annehmen zu können die folgenden Konfigurationen: einer der drei Verbindungspunkte mit dem haptischen Aktuator (10); zwei der drei Punkte sind mit einem jeweiligen haptischen Aktuator (10) verbunden; Jeder Punkt ist mit einem entsprechenden haptischen Aktuator (10) verbunden.

13. Haptische Schnittstelle nach einem der Ansprüche 8 bis 12, **dadurch gekennzeichnet, dass** sie eine Softwarebibliothek umfasst, um die Auswahl spezifischer Impulse und die Erstellung individueller Impulse durch einen Benutzer zu ermöglichen.

## Revendications

1. Actionneur haptique (10) comprenant au moins un capteur (1) et au moins un actionnement (2) à fonctionnement magnétique comprenant au moins un corps statorique (202), ledit capteur (1) comprenant au moins un support (11; 21; 31) supporté par au moins un élément élastique (12; 22; 32), ledit capteur (1) étant apte à détecter une force appliquée sur au moins un desdits supports (11; 21; 31) fonction d'une distance entre au moins un desdits supports (11; 21; 31) et un desdits corps statoriques (202), **caractérisé par le fait que** ledit au moins un capteur (1) comprend un premier support (21) réalisé en matériau ferromagnétique et supporté par un premier élément élastique (22), ledit premier élément élastique (22) présentant une rigidité élevée, ledit capteur (1) comprenant en outre au moins un élément sensible (4) sur au moins un circuit imprimé, ledit actionnement (2) comprenant au moins un desdits enroulements électriques (201) pour permettre à l'un desdits corps de stator (202) d'être magnétisé, générant un flux magnétique lorsque le courant circule dans l'enroulement électrique (201) pour pouvoir contrôler le mouvement de un deuxième support (31) en matériau ferromagnétique solidaire de la surface d'un corps (M) et supporté par un deuxième élément élastique (32), ledit deuxième élément élastique (32) ayant une faible rigidité pour pouvoir se transmettre à la surface d'un mouvements de réponse du corps (M) sous forme de retour haptique à un utilisateur, ledit premier support (21) et ledit deuxième support (31) étant reliés via un élément de connexion non magnétique (3) pour pouvoir agir de manière synchrone par rapport à un élément sensible (4), ledit élément sensible (4) sur un circuit imprimé comprenant au moins une paire de zones conductrices faisant face à au moins un desdits premier (21) et deuxième (31) supports, chaque zone conductrice constituant une première face d'un condensateur dont la capacité est déterminée par taille de la zone conductrice et épaisseur d'un diélectrique, au moins un desdits premier (21) et deuxième (31) supports composant une deuxième face des deux condensateurs, le circuit équivalent étant égal à deux condensateurs en série délimités par chaque zone conductrice dudit élément sensible (4), la mesure de la capacité globale du circuit équivalent permettant de mesurer la distance entre ledit élément sensible (4) et ladite surface d'un corps (M).

2. Actionneur haptique (10) selon la revendication 1, **caractérisé en ce que** ledit support (11; 21; 31) est en matériau ferromagnétique et ledit actionnement (2) comprend au moins un bobinage électrique (201) pour permettre l'aimantation dudit corps de stator (202) générant un flux magnétique lorsque le courant circule dans ledit enroulement électrique (201).

3. Actionneur haptique (10) selon la revendication précédente, **caractérisé en ce que** ledit corps de stator (202) est réalisé en matériau souple à faible hystérésis, pour garantir l'annulation du flux magnétique lorsque le courant dans ledit bobinage électrique (201) est interrompu.

4. Actionneur haptique (10) selon l'une quelconque des revendications précédentes, **caractérisé en ce que** ledit au moins un capteur (1) comprend un unique support (11) et un unique élément élastique (12) interposé entre ledit support (11) et ledit stator de corps (202).

5. Actionneur haptique (10) selon la revendication précédente, **caractérisé en ce qu'**il comprend au moins un élément de connexion (30) apte à maintenir ledit support (11) coulissant sur l'un desdits corps statoriques (202) en interposant au moins un élastique élément (13).

6. Actionneur haptique (10) selon la revendication 1, **caractérisé en ce que** ledit premier support (21) et ledit deuxième support (31) se déplacent coaxialement pour pouvoir agir par rapport à un même point de ladite surface d'un corps (M).

7. Actionneur haptique (10) selon l'une quelconque des revendications précédentes, **caractérisé en ce que** ledit élément élastique (12; 22; 32) est réalisé en matériau amagnétique.

8. Interface haptique, comprenant une surface d'un corps (M) supportée par au moins un actionneur haptique (10) selon l'une des revendications précédentes et une unité de gestion (20) de l'actionneur haptique (10) pour échanger des données, localement et/ou à distance, pour transmettre des données détectant les mouvements d'un utilisateur et pour transmettre un retour haptique à l'utilisateur situé en au moins un point du corps de l'utilisateur, ledit au moins un actionneur haptique (10) comprend au moins un capteur (1) adapté pour collecter des données de mesure qui détectent les mouvements de la surface d'un corps (M) et pour fournir les données de mesure collectées à une application de commande via l'unité de gestion (20) et au moins un implémentation (2) capable de déplacer la surface d'un corps (M), à partir des données d'instructions de l'application de contrôle reçues du capteur (1) à travers l'unité de gestion (20), **caractérisée en ce que** ledit au moins un actionneur haptique (10) perçoit je mouvements tactiles de la surface d'un corps (M) au moment où l'utilisateur impose les mouvements et transmet des mouvements de réponse à la surface d'un corps (M) sous forme de retour haptique à l'utilisateur, appelé capteur (1) comprenant au moins un soutien (11; 21; 31) en matériau ferromagnétique solidaire de la surface d'un corps (M) et supporté par au moins un élément élastique (12; 22; 32), et ledit entraînement (2) comprenant au moins un enroulement électrique (201) pour permettre la magnétisation d'un corps de stator (202) générant un flux magnétique lorsque le courant circule dans l'enroulement électrique (201), ledit capteur (1) étant adapté pour détecter une force appliquée sur au moins un desdits supports (11; 21; 31) en fonction d'une distance entre au moins un desdits supports (11; 21; 31) et un desdits corps de stator (202).

9. Interface haptique selon la revendication précédente, **caractérisée en ce que** les mouvements de réponse sous forme de retour haptique à l'utilisateur sont une amplification en ampleur des mouvements tactiles.

10. Interface haptique selon l'une quelconque des revendications 8 ou 9, **caractérisée en ce que** les mouvements de réponse comme retour haptique à l'utilisateur sont prédéfinis.

11. Interface haptique selon l'une quelconque des revendications 8 à 10, **caractérisée par le fait que** ladite surface d'un corps (M) est contrainte par une pluralité desdits actionneurs haptiques (10) aptes à répartir les efforts de manière appropriée et synchronisée. en coordonnant l'unité de gestion (20).

12. Interface haptique selon l'une quelconque des revendications 8 à 11, **caractérisée par le fait que** ladite surface quasi rigide d'un corps (M) est contrainte par rapport à au moins trois points non alignés afin de pouvoir assumer l'un des les configurations suivantes : un des trois points connectés audit actionneur haptique (10); deux des trois points connectés à un actionneur haptique respectif (10); chaque point étant connecté à un actionneur haptique respectif (10).

13. Interface haptique selon l'une quelconque des revendications 8 à 12, **caractérisée en ce qu'**elle comprend une bibliothèque logicielle pour permettre le choix d'impulsions spécifiques et la création d'impulsions personnalisées par un utilisateur.
